# EUROPEAN PATENT SPECIFICATION

(11) **EP 4 052 413 B1**
(45) Date of publication and mention of the grant of the patent: **30.10.2024**
(21) Application number: 19816296.8
(22) Date of filing: 04.12.2019
(51) Int. Cl.: H04L 9/40, H04L 9/00, H04W 12/069, H04L 9/32

(54) **DECENTRALIZED NETWORK ENTITY AUTHENTICATION**
DEZENTRALE AUTHENTIFIZIERUNG VON NETZEINHEITEN
AUTHENTIFICATION D'ENTITÉS DE RÉSEAU DÉCENTRALISÉE

(43) Date of publication of application: 07.09.2022
(73) Proprietor: Huawei Technologies Co., Ltd., Shenzhen, Guangdong 518129 (CN)
(72) Inventor: HECKER, Artur, 80992 Munich (DE); YAN, Xueqiang, 80992 Munich (DE); XIAO, Xun, 80992 Munich (DE)
(74) Representative: Roth, Sebastian
(86) International application number: PCT/EP2019/083698
(87) International publication number: WO 2021/110260

(56) References cited:
- US-A1- 2017 346 639
- US-A1- 2019 251 241
- ANDREW TANENBAUM ET AL: "Computer Networks - fifth Edition", COMPUTER NETWORKS, FIFTH EDITION, 31 December 2011 (2011-12-31), US, pages 1 - 933, XP055421775, ISBN: 978-0-13-212695-3, Retrieved from the Internet <URL:https://docs.google.com/viewer?a=v&pid=sites&srcid=ZGVmYXVsdGRvbWFpbnxza21pbmh8Z3g6NjQxMTI2MmYxMTAwZmNjZQ> [retrieved on 20171103]
- "3rd Generation Partnership Project; Technical Specification Group Services and System Aspects; Security Aspects; Study on security aspects of the 5G Service Based Architecture (SBA) (Release 16)", 3 December 2019 (2019-12-03), XP051835553, Retrieved from the Internet <URL:https://ftp.3gpp.org/tsg_sa/WG3_Security/TSGS3_97_Reno/Docs/S3-194516.zip S3-194516_draft_TR_33855-190-cl.doc> [retrieved on 20191203]

## Description

### TECHNICAL FIELD

The present application relates to decentralized network entity authentication method and process for future mobile networks including 5^{th} generation mobile network or cellular network (5G) and beyond. Furthermore, the application also relates to method, process and corresponding computer program of network functions (NF) authentication.

### BACKGROUND

Future mobile networks including 5G and beyond are expected to support many new types of connections between various devices such as cars, wearables, sensors and actuators from both private and industrial environment. These new types of connections usually imply very distinct requirements of service requests, and thereby pose challenges to the management and control of the mobile networks.

In particular, supporting various new types of services may have a deep impact on the mobile network architecture, in particularly core network (CN). In today's mobile network, services mainly refer to providing data and voice services for different type of terminals which can access the network. The CN provides the same treatment to different terminals following the best-effort principle. Hence, those services are predictable, and how to respond to them is be well pre-planned.

In order to adapt to various potential services, the network architecture has to be more flexible, dynamic and agile. Therefore, 3GPP SA2 defines the architecture as service-based architecture (SBA), wherein network functions (NFs) are modularized so that network services can be composed with several standardized NFs. Each NF may be instantiated by one or more NF instances.

In this document, the terms "NF" and "NF instance" are not strictly distinguished, i.e. may be used interchangeably. With enabling technologies, e.g. software defined networking (SDN), NF virtualization (NFV) etc., any virtual network may be composed. 5G clearly defines technical specifications on architectural support of virtualized deployment, which is a coincidence with the current technology trend.

In addition, with edge-computing the architecture of future mobile networks could be fully distributed, redundant, stateless, and scalable software-defined, which provides services by multiple NFs from several locations.

According to 3rd Generation Partnership Project (3GPP) specifications, every NF first has to register at a repository (called the NRF in 3 GPP). After that, the NF can be discovered and can provide its services. The registration procedure was recently extended to contain a certification procedure, wherein an NRF will issue a certificate (NF-cert) to an NF with the signature of the NRF for authentication.

In the future it is expected that many NFs could be deployed closer to the edge of the mobile network. Thus, it will be inefficient, if those NFs at the edge still contact one single NRF for registration, due to a longer latency and the bottleneck effect at a centralized NRF.

Considering huge amount of NFs in the edge which can provide different kind of service in the future, the current authentication architecture may not satisfy future requirements.

US 2019/251241 A1 discloses a security management for service authorization in communication systems with service-based architecture.

US 2017/346639 A1 discloses systems and methods for managing public key certificates and supporting users thereof.

'3rd Generation Partnership Project; Technical Specification Group Services and System Aspects; Security Aspects; Study on security aspects of the 5G Service Based Architecture (SBA) (Release 16)", (20191203), 3GPP DRAFT; S3-194516, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE' discloses security aspects of the 5G service-based architecture.

### SUMMARY

The inventors of the present disclosure considered that authentication between two NFs could be done in a distributed way, but that a root of trust is required. A typical solution would be Public Key Infrastructure (PKI). In a PKI, a Certificate Authority (CA) issues a certificate to a client, by signing the certificate with a signing key of the CA. The signing key is usually a private key that is kept confidentially by the CA. The certificate then can be verified by using the counter-part of the signing key (i.e., a public key). Specifically, the signature of the CA in the certificate is verified with the public key of the CA. In this way, a client can verify the certificate of another client, if the client possesses the public key of the CA.

Conventionally, the CA's certificates containing their public keys are pre-installed on the entities. A typical example is the certificates contained in web browsers, which will be used to verify the certificate of a website. Note that the CA can be built in a tree-like structure, wherein a CA at a higher layer can issue certificates to CA at lower layer. Similarly, the public key of a CA at a higher level can be used to verify the certificate issued by a CA at a lower level.

The main disadvantages thereby are identified by the inventors as follows:
1. An NF can be instantiated ("NF instance") anytime and anywhere, as needed. Thus, with several magnitudes more virtual NFs than before, configuring, associating and updating every instance authentication information with a centralized authentication is unrealistic, especially if NFs can be instantiated and de-instantiated in a dynamic way. This causes significantly repeated work to configure every new NF (instance).
2. Future mobile networks will deeply integrate with edge computing. An NF could be deployed at an edge node, and its registration will be done at a different NRF. According to the current 3GPP standard, where an NF will be certified by the NRF where the NF registers, this means that every NF has to possess the public keys of every other NRFs, in order to authenticate an NF registering at a different NRF. This will be very inefficient when the numbers of NFs and NRFs are large, and both of them can dynamically change.
3. In the future, NFs belonging to different domains may interact with each other. Further, existing authentication solutions require a centralized entity, which behaves as a root of trust. Establishing such an interoperability is also quite difficult.

The conclusion of the inventors in view of the above is that a decentralized authentication solution is needed for a distributed setting with multiple NRFs. However, the observed deficiencies need to be overcome.

Accordingly, embodiments of the present disclosure aim to provide a solution for decentralized network entity authentication, particularly for NF authentication, which solution does not have the observed deficiencies. In particular, an objective is to provide a more efficient decentralized authentication procedure. The solution should not require repeated work to configure every new NF (instance).

In particular, it is considered that when an NF needs to authenticate another NF, if a certificate of the second NF has to be verified, the first NF has to possess a verification tool (e.g. a public key) of the NRF that issues the certificate to the second NF.

Further, it is considered that in the future mobile networks, there will be many NFs, which dynamically come and go. Therefore, pre-installing the verification tools of every NRF to every single NF is unrealistic. In addition, not every verification tool will be immediately required by a NF, thus it is also not necessary to pre-install all the verification tools. Moreover, even if there is a fixed number of NFs, there would be a dynamic number of NRFs, which could be added, removed and migrated at run-time happening everywhere in the network, so such a change will also cause a significant amount of updates to the NFs. Last but not least, if a common CA certifying NRFs from different domains is not available, pre-installing the verification tools does not support interoperability scenarios, in which NRFs belong to different domains (e.g. different operators).

The objective is achieved by the embodiments as described in the enclosed independent claims. Advantageous implementations of the embodiments are further defined in the dependent claims. In the following, parts of the description and drawings referring to embodiments not covered by the claims, are not part of the invention, but are illustrative examples necessary for understanding the invention.

A first aspect of this disclosure provides a first network entity for decentralized network entity authentication, wherein the first network entity comprises a processor being configured to: receive a request from a second network entity, wherein the request comprises an identification (ID) of a third network entity; and send a response to the second network entity, wherein the response comprises a verification tool of the third network entity.

In the first aspect, wherein the request comprises more than one ID, and each of the ID corresponds to a different third network entities. The third network entity in the following may mean one or more third network entity, and each of third network entity corresponds to different ID.

In the first aspect, the first network entity and the third network entity are each an NRF. Further, the second network entity is an NF. The first network entity ( the first NRF) may manage the second network entity ( the first NF).

Nevertheless, the first network entity may provide the verification tool of the third network entity (the second NRF) to the second network entity. This enables the second network entity to authenticate a fourth network entity (a second NF) that is managed by the third network entity. Accordingly, an efficient decentralized network entity authentication solution can be provided. The ID of the third network entity may be an NRF-ID.

In an implementation form of the first aspect, the processor is further configured to: receive a registration request from the second network entity, wherein the registration request comprises a profile of the second network entity; and send a response of the registration result to the second network entity, wherein the registration result comprises an ID of the first network entity.

Notably, there may be multiple network entities that provide registration results (e.g. multiple NRFs at which NFs register), and the second network entity can use the ID of the first network entity to distinguish it from those other network entities.

In an implementation form of the first aspect, the processor is further configured to: receive a first verification tool publishing request from the third network entity, wherein the first verification tool publishing request comprises the verification tool of the third network entity; and/or send a second verification tool publishing request to the third network entity, wherein the second verification tool publishing request comprises a verification tool of the first network entity.

In this way, the third network entity and the third network entity can initiate a procedure that shares the verification tools.

In an implementation form of the first aspect, the processor is further configured to: publish a transaction block to the third network entity, wherein the transaction block comprises the verification tool of the first network entity and/or the third network entity; or receive a transaction block published by the third network entity, wherein the transaction block comprises the verification tool of the third network entity and/or first network entity.

For instance, the transaction blocks may be transaction blocks used in a blockchain technology. The verification tools may be transactions. These transaction blocks may be verified in a distributed manner by network entities (e.g. NRFs) to establish a mutually trusted relationship and make them secure against forgery.

In an implementation form of the first aspect, the processor is further configured to: participate in a competition with the third network entity, in order to determine who publishes the transaction block.

In particular, the winner of the competition may publish the transaction block. For example, a distributed consensus protocol used in blockchain technology may provide a basis for this competition.

In an implementation form of the first aspect, the processor is further configured to: update the verification tool of the first network entity with the verification tool included in the transaction block published by the third network entity, if the published transaction block is validated.

In particular, both the transaction block and every transaction (verification tool) in the transaction block may be validated. The validation may happen at two places. First, before including a transaction (a received verification tool) into a transaction block, and second, after the transaction block is published from a winner of the competition.

In an implementation form of the first aspect, the first network entity and the third network entity are arranged in a hierarchical structure of network entities, the hierarchical structure comprising multiple hierarchical parallel trees; and the first network entity and the third network entity are root network entities arranged, respectively, on a highest hierarchy level of a different tree.

In an implementation form of the first aspect, the first network entity and the third network entity are arranged in a hierarchical structure of network entities; the first network entity and the third network entity are arranged on different hierarchy levels; and the processor is further configured to forward the request received from the second network entity to the parent network entity of the first network entity.

In particular, the first and the third network entity may be on different hierarchy levels of the same tree, or may be on different hierarchy levels of different trees. Notably, forwarding the request to the parent network entity does not depend on where the target network entity is. The target network entity could belong to a sibling network entity.

In an implementation form of the first aspect, the verification tool of the third network entity is a verification tool of a lowest common ancestor (LCA) network entity of the first network entity and the third network entity.

In an implementation form of the first aspect, the processor is further configured to: send a request to the parent network entity of the first network entity to identify a LCA network entity of the first network entity and the third network entity.

In an implementation form of the first aspect, the verification tool of a the first network entity and/or a verification tool of the third network entity given network entity comprises, respectively, a public key, a profile, and a signature, of the first network entity and/or the third network given network entity.

In an implementation form of the first aspect, the verification tool of the first network entity and/or the third network entity comprises a public key pair, wherein the public key pair comprises, respectively, the public key of the first network entity or the third network entity, and a public key of an NF.

In this implementation form, the request received by the first network entity from the second network entity may comprise, in addition to the ID of the third network entity, an ID of an NF, particularly of the above-mentioned NF, for which there is a public key in the verification tool.

In an implementation form of the first aspect, the ID comprises one of: IP address, MAC address, URL.

A second aspect of this disclosure provides a second network entity for decentralized network entity authentication, wherein the second network entity comprises a processor being configured to: send a request to a first network entity, wherein the request comprises an ID of a third network entity; and receive a response from the first network entity, wherein the response comprises a verification tool of the third network entity.

In the second aspect, wherein the request comprises more than one ID, and each of the ID corresponds to a different third network entity. Similarly, the third network entity in the following may mean one or more third network entities, and each of third network entity corresponds to different ID.

In the second aspect, the first network entity and the third network entity are each an NRF. Further, the second network entity is an NF. The first network entity (the first NRF) may manage the second network entity (the first NF). Nevertheless, the second network entity may receive the verification tool of the third network entity (the second NRF) from the first network entity. This enables the second network entity to authenticate a fourth network entity (the second NF) managed by the third network entity. Accordingly, an efficient decentralized network entity authentication solution can be provided.

In an implementation form of the second aspect, the processor is further configured to: receive a service request from a fourth network entity, wherein the service request comprises a certificate of the fourth network entity, wherein the certificate of the fourth network entity is signed by the third network entity; and verify the certificate with the verification tool of the third network entity.

In an implementation form of the second aspect, the processor is further configured to: receive a service request from a fourth network entity, wherein the service request comprises a certificate of the fourth network entity, wherein the certificate of the fourth network entity is signed by the third network entity; and determine the ID of the third network entity from the certificate.

The fourth network entity is an NF like the second network entity. This implementation form provides an efficient way for the second network entity to obtain the ID, which it can then use to send the request to the first network entity. The ID of the third network entity may be an NRF-ID. However, other way to determine the ID of the third network entity by the second network entity are also possible.

In an implementation form of the second aspect, the processor is further configured to: verify the certificate with the verification tool of the third network entity.

That is, the second network entity can verify the fourth network entity, even if the fourth network entity is managed (registered at) by another network entity (i.e., the third network entity, i.e.. the second NRF) than the second network entity (i.e., the first network entity, i.e., the first NRF).

In an implementation form of the second aspect, the processor is further configured to: send a registration request to the first network entity, wherein the registration request comprises a profile of the second network entity; and receive a response of the registration result from the first network entity, wherein the registration result comprises a certificate issued by the first network entity for the second network entity.

In this way, the second network entity can register with the first network entity, i.e., it may then be managed by the first network entity.

It has to be noted that all network entities and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### DEFINITIONS AND NOTATIONS

Some abbreviations and terms, which are used in this disclosure, are defined in the following:
- Private key *(PrivKey)*: may also be called a "signing key", and is a variable in cryptography that is used with an algorithm to encrypt and decrypt data.
- Public key *(PubKey)*: is a cryptographic key that can be obtained and used by anyone to encrypt messages intended for a particular recipient, such that the encrypted messages can be deciphered only by using the corresponding *PrivKey.*
- Signature: is a code generated by using a message and the sender's *PrivKey,* and can be verified by anyone who has access to the sender's *PubKey.* The verification proves that the sender had access to the *PrivKey,* and therefore is likely to be the person associated with the *PubKey.* This also ensures that the message has not been tampered with, as a signature is mathematically bound to the message it originally was made with, and verification will fail for practically any other message, no matter how similar to the original message.
- Certificate (*Cert*): is a digital profile that contains attribute data information of the owner of the certificate, the *PubKey* of the owner, the signature of the certificate issuer. The certificate can be verified by using the *PubKey* of the issuer.
- Verification tool *(VerTool)*: a tool that is used to verify other's certificate. For example, the *VerTool* in the current 3GPP specification refers the *PubKey* that is used by an NRF to sign a cert of an NF. Note that a *VerTool* is not limited to a *PubKey,* but can be any tool that serves the same purpose of verifying an opponent.

Some notations are further defined in the following table:

| Msg{*PrivKey*} | a message is signed by the *PrivKey* of a sender |
|---|---|
| NF-cert | the certificate of an NF(instance) |
| NRF-ID | the ID of an NRF |
| NRF-VerTool | the *VerTool* of an NRF |

### BRIEF DESCRIPTION OF DRAWINGS

The above described aspects and implementation forms of the present disclosure will be explained in the following description of specific embodiments in relation to the enclosed drawings, in which
- FIG. 1: shows network entities (first and second network entity) according to embodiments.
- FIG. 2: shows a flat distributed architecture of network entities (flat NRF architecture, in this example).
- FIG. 3: shows a hierarchical architecture of network entities (hierarchical NRF architecture, in this example).
- FIG. 4: shows a detailed procedure for decentralized authentication in exemplarily a flat (distributed) architecture of network entities (NRFs, in this example).
- FIG. 5: shows a method according to an embodiment.
- FIG. 6: shows a method according to an embodiment.

### DETAILED DESCRIPTION OF EMBODIMENTS

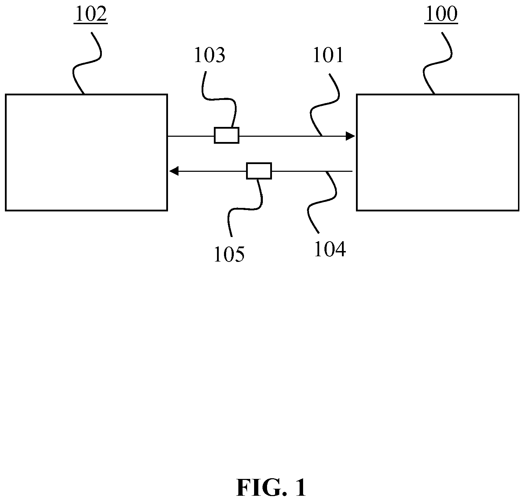

FIG. 1 shows a first network entity 100 according to an embodiment, and a second network entity 102 according to an embodiment. The network entities 100 and 102 may support a decentralized network entity authentication, in particular decentralized NF authentication. The first network entity 100 is a first NRF, and the second network entity 102 is a first NF. The second network entity 102 may be registered at the first network entity 100, e.g., the first network entity 100 may manage the second network entity 102. The first network entity 100 and the second network entity 102 each comprises a processor, which is configured to perform the functions/actions described for the first network entity 100 and second network entity 102, respectively, in the present disclosure.

The second network entity 102 is configured to send a request 101 to the first network entity 100. Accordingly, the first network entity 100 is configured to receive the request 101 from the second network entity 102. The request 101 comprises an ID 103 of a third network entity 200. The third network entity 200 comprises a processor, which is configured to perform the functions/actions described for the third network entity 200 in the present disclosure. The third network entity 200 is a second NRF, and the ID 103 may be an NRF-ID of the second NRF that is the third network entity 200. The third network entity 200 may manage another (fourth) network entity which is different from the second network entity 102.

In one possible implementation, the request 101 may comprises more than one IDs 103 of different third network entities 200, and each third network entities 200 corresponds to each ID, or each ID corresponds to a different third network entities. It should be noted that, the third network entity in this disclosure may mean one or more third network entities, and each of third network entity corresponds to a different ID. It will not be elaborated in order to avoid redundancy.

The first network entity 100 is further configured to send a response 104 to the second network entity 102, wherein the response 104 comprises a verification tool 105 of the third network entity 200. The verification tool 105 may comprise a public key of the third network entity 200 or may comprise a public key pair comprising the public key of the third network entity 200 and a public key of an NF. Accordingly, the second network entity 102 may be configured to receive the response 104 including the verification tool 105 from the first network entity 100.

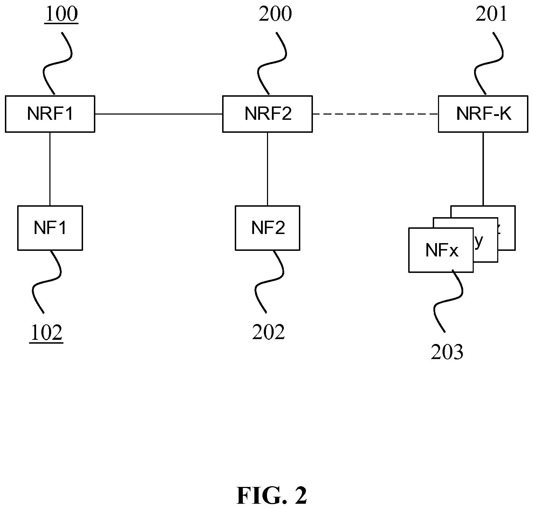

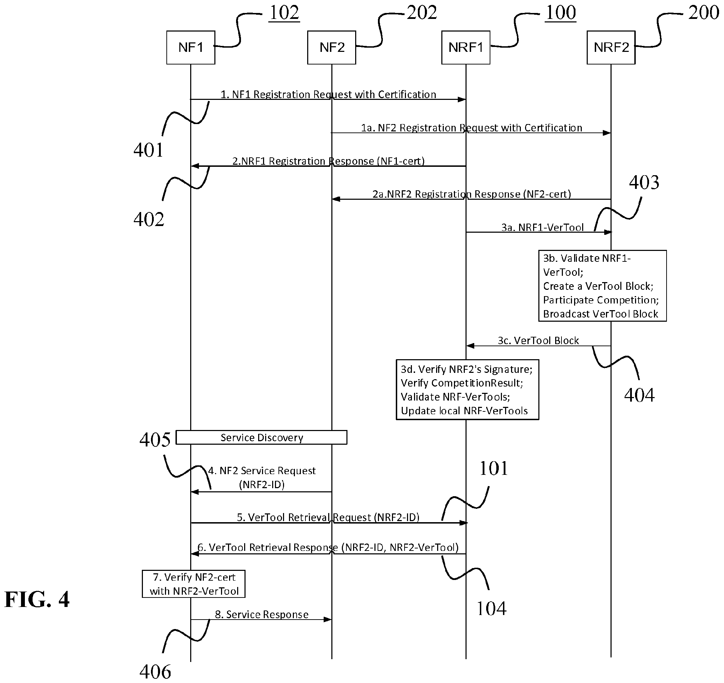

The second network entity 102 may be further configured to receive a service request 405 (not shown in FIG. 1, but shown in FIG. 4) from a fourth network entity 202 (not shown in FIG. 1, but shown in FIG. 2), wherein the service request 405 comprises a certificate of the fourth network entity 202, and wherein the certificate of the fourth network entity 202 may be signed by the third network entity 200. The fourth network entity 202 comprises a processor, which is configured to perform the functions/actions described for the fourth network entity 202 in the present disclosure.

For example, the fourth network entity 202 may be registered at the third network entity 200, i.e., the third network entity 200 may manage the fourth network entity 202. The second network entity 102 may then verify the certificate of the fourth network entity 202 with the verification tool 105 of the third network entity 200 (as obtained with the response 105 from the first network entity 100).

In one possible implementation, the second network entity 102 may proactively send a service request to a fourth network entity 202 to authenticate the certificate of the fourth network entity, and the second entity 102 may use this request to obtain the certificate of the fourth entity. The service request may comprises at least an identity, ID, of the fourth network entity 202.

Notably, the above-described procedures may likewise applicable for the third network entity 200 and the fourth network entity 202, e.g., the fourth network entity 202 may obtain the verification tool 105 of, for instance, the first network entity 100 from the third network entity 200. Further, the fourth network entity 202 may then verify a certificate of the second network entity 102 when the second network entity 102 sends a service request 405 to the fourth network entity 202.

Similarly, in proactive authentication case, the second network entity 102 may receive response from the fourth network entity 202 which includes certificate of the fourth network entity. The second network entity 102 obtains the ID of the third network entity 200 based on the certificate of the fourth network entity 202.

In this way, authentication between the two network entities 102 and 202, in particular NFs, may be performed in a decentralized manner, i.e., even if the two network entities 102 and 202 are registered/managed at/by different network entities 100 and 200, in particular NRFs.

Any network entity in the present disclosure may be implemented by a device that comprises processing circuitry (not shown) configured to perform, conduct or initiate the various operations of the network entity described herein. The processing circuitry may comprise hardware and/or software. The hardware may comprise analog circuitry and/or digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory coupled to the one or more processors. The non-transitory memory may carry executable program code which, when executed by the one or more processors, causes the device implementing the network entity to perform, conduct or initiate the operations or methods described herein.

In the following, the embodiments shown in FIG. 1 are described in more detail, in particular, the network entities 100, 200, 102, and 202 mentioned above. For the following description the first network entity 100 and the third network entity 200 are NRFs. In this disclosure, the network entities 100 and 200 could be interchanged. The second network entity 102 and the fourth network entity 202 are NFs. In this disclosure these network entities 102 and 202 could be interchanged.

Further, in this disclosure a distributed NRF environment is considered, in which multiple NRFs may exist. An NRF may, for instance, be assigned to manage one domain, wherein all NFs in one such domain registers at the same NRF. The NFs that register at one NRF may be called the "managed NFs" of the NRF. The domain here may be a geography location, or an operator's network, or one management area, or an autonomous are, or specific technical field etc. For example, one domain may be a network of an operator, or may be a tracking area of a mobile network, or may be subnet of a mobile network.

It is further considered that there is no centralized control of the NFs, in particular, there is no centralized NRF. It is not assumed that the NRFs have the same owner, which represents a typical multi-operator scenario, in which every operator only controls its own NRF.

Based on these settings, the decentralized authentication solution is proposed based on the embodiments, for one, by extending the traditional NRF to the NRF 100 (or NRF 200). Such an extended NRF 100/200 may act as a peer node interacting with other NRFs, and provides authentication services to its managed NFs 102/202. In the embodiments, two new features are introduced to the traditional NRF.

The first feature is the capability of the NRF 100 to share its own verification tool 105 to another NRF 200, and all NRFs 100/200 together maintain an identical copy of all shared verification tools 105.

The second feature is to provide a verification tool 105 of a particular NRF 100 in response to a verification tool retrieval request 101 from its managed NF 102. This is shown in FIG. 1.

The present disclosure also considers two different scenarios. The first scenario is that all NRFs are completely equal. They are peers in the distributed NRF system to share their verification tools 105 with each other. The goal is to guarantee a same copy of the verification tools 105 on every NRF. For an NF under the domain of an NRF, the NRF is responsible for providing the verification tool 105 of a particular NRF from another domain that is on-demand requested by the managed NF. The general architecture of this scenario is shown in FIG. 2.

In particular, in FIG. 2 the NRF1 100 manages the NF1 102, and the NRF2 200 manages the NF2 202. Further, additional NRFs 201 may manage additional NFs 203. The NRFs 100, 200, 201 may share their verification tools 105.

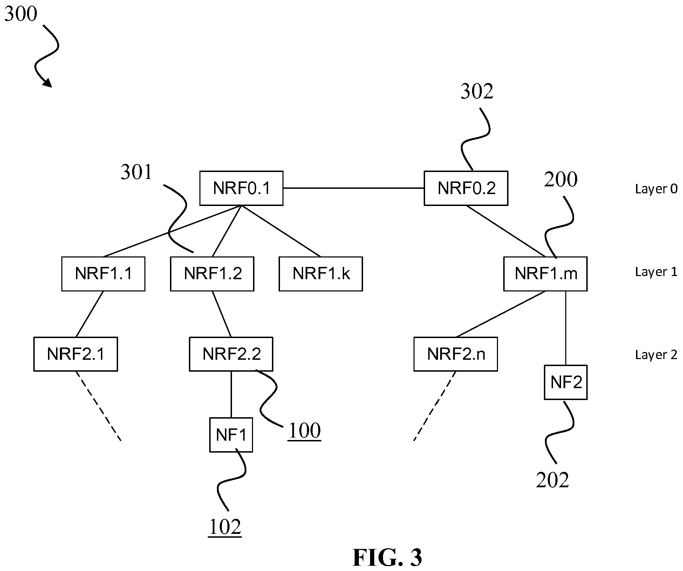

The second scenario is that the topology of the NRFs presents a hierarchical architecture/structure 300, which is shown in FIG. 3. Here, the NRFs are arranged in different layers (hierarchical levels). The hierarchical structure 300 may comprise one or more hierarchical parallel trees (could be the same as domains). At the top level, i.e. 0-th layer, each NRF represents a root NRF of one tree. Child NRFs arranged at the i+1-th layer (i≥0) are controlled by one of NRF at the i-th layer. This scenario is different to the flat NRF architecture of FIG. 2, wherein trust among the NRFs is not assumed.

In particular, in FIG. 3, as an example, two NRF branches exist, rooted respectively at NRF0.1 and NRF0.2. NF1 102 is under NRF2.2's (NRF 100) management, while NF2 202 is under NRF 1 .m's (NRF 200) management. The present disclosure considers how the verification tools 105 would be retrieved, so that the two NFs 102 and 202 can authenticate each other.

The distributed NRF system of FIG. 2 or FIG. 3 could have a certain network topology. The distributed NRF system can be formed with NRFs deployed ranging at the edge (e.g. close to the base station with edge computing) to the core network (e.g. in a data center). An NRF can be either a physical equipment as conventional devices or a virtualized NF that may be controlled in run-time whenever an update, a migration, a removal is needed. NRFs may be considered to be in different domains, among which a trusted relationship cannot be achieved easily.

A full procedure for decentralized NF authentication is depicted - with respect to the flat architecture shown in FIG. 2 - in FIG. 4, and is described below.
1. The NF1 102 sends a registration request 401 to register at the NRF1 100. In the registration request 401, the NF1 102 provides its profile data to the NRF1 100. The parameters of the registration request 401 comprise at least the ones listed in the table below:

| | |
|---|---|
| 1 | NF Type (e.g. AMF, SMF, PCF, ...) |
| 2 | Public land mobile network (PLMN) ID |
| 3 | Network Slice related Identifier(s) e.g. single network slice selection assistance information (S-NSSAI), network slice instance NSI ID, if any |
| 4 | Entry Point (e.g. internet protocol (IP) or fully-qualified domain name FQDN) |
| 5 | NF1 Capacity Information |
| 6 | NF1 Priority Information |
| 7 | NF1 Nonce |
| 8 | Certificate Flag (e.g. 1 issuing a certificate; 0 otherwise) |
| 9 | NF1's PubKey |

Notably, the above-listed parameters are basic parameters for registration, and the list can be extended, if other profile information is to be added.
1a. The NF2 202 will follow the same procedure as the NF1 102 does, in order to register at the NRF2 200.
2. The NRF1 100 receives the registration request 401 from the NF1 102. NRF1 may create an NF entry, if all information of NF1's profile is verified. If NF I's profile is not verified successfully, the NF1 102 registers failed. The registration response message 402 of the NRF 100 to the NF1 102 may include parameters as listed in the table below:

| | |
|---|---|
| 1 | Registration Result |
| 2 | NF1-cert (If Certification Flag is True and Registration Result is SUCCESS) |

The NRF1 100 then issues a certificate for the NF1 102, and parameters that may be used therefore are listed in the table below:

| | |
|---|---|
| 1 | NF1's Profile |
| 2 | NRF1's Profile |
| 3 | NRF1's Signature |

The NRF1's profile data may comprise parameters as listed in the table below:

| | |
|---|---|
| 1 | NRF1-ID |
| 2 | NRF1's PLMN ID |
| 3 | NRF1 Capacity Information |
| 4 | NRF1 Entry Point (e.g. IP or FQDN) |

The listed parameters in all tables may be basic parameters, and may be extended if more information has to be added.
2a. The NRF2 200 follows the same procedure as in step 2, wherein the NRF2 200 replies to the NF2 202 with a NF2-cert, e.g., with a certificate for the NF2 202.
3a. The NRF1 100 may send the NRF2 200 its verification tool 105, (i.e. NRF2-VerTool).
The verification tool 105 may comprise the parameters listed in the table below:

| | |
|---|---|
| 1 | NRF1-PubKey |
| 2 | NRF1 Profiles |
| 3 | Specific PubKey for an particular NF |
| 4 | NRF1's Signature |

The listed parameters can be further extended, if more parameters are to be added, in order to define a more specific verification tool 105.
The received verification tool 105 (e.g. NRF1-VerTool) will be validated (by NRF2 200), for example, first by checking the signature in the response 402. If the verification tool 105 is valid, it will be kept, otherwise, it will be dropped.
Notably, this step only decides, whether the received data matches the validation information. Whether the verification tool 105 should be stored as the verification tool 105 of the NRF1 100, indicated by the NRF-ID in the NRF profile, will be decided later.
3b. The NRF2 200 periodically creates a transaction block (VerTool Block) with all the verification tools 105 passing the validation check. Elements that a transaction block may comprise are shown in the table below:

| | |
|---|---|
| 1 | VerToolBlockHeader (MetaData, CompetitionProof, NRF1's Signature, PointerToExistingBlock, ...) |
| 2 | VerToolBlockBody (a list of VerTools) |

The "MetaData" in the above table may provide the basic information of the transaction block, such as the total size, the number of verification tools 105, the NRF profile data (see table above) of the NRF that creates the transaction block and so on.
The "CompetitionProof" may be a proof that a winner of a competition has to provide. This proof should be available to be verifiable by the other NRFs.
The "NRF1's Signature" may be the signature of the NRF that creates the transaction block of verification tools 105.
The "PointerToExistingBlock" is a pointer linking the transaction block of verification tools 105 to an existing transaction block of verification tool 105.
This information allows to form a certain data structure with all published transaction blocks of verification tools 105, which depends on the competition incorporated in the system. The "Block Header" may be extended, if more information is required to add to the header.
Notably, the size of the transaction block may depend on a system parameter that is applied by all NRFs. The size of the transaction block may be changed, if instructed from the management layer or a distributed negotiation process, wherein a new size value is agreed.
The NRF2 200 may participate in a competition, in order to qualify itself to win a chance to propose an update to the NRF1 100.
Notably, the competition may be defined by an existing distributed consensus protocol. The distributed consensus protocol may consider different types of system failure models as follows.
The first type is system failures. System failures mean that network nodes and/or links lose their functionalities to participate the network system. For example, a network node may have no memory, memory access error, and no capacity to respond request. A network link may have packet loss, transmission delays, and transmission errors. Considering this type of failures, a protocol from the Paxos-family or Raft-family can be selected as an implementation for the consensus module.
The second type is Byzantine failures, wherein nodes have different incentives and can lie, coordinate, or act arbitrarily, we cannot assume a simple majority is enough to reach consensus. Half or more of the supposedly honest nodes can coordinate with each other to lie. For example, if an elected leader is Byzantine and maintains strong network connections to other nodes, it can compromise the system. In order to overcome this type of issues, an NRF can implement DLS algorithm or a Practical Byzantine Fault-Tolerance (PBFT) protocol. Tendermint is a new consensus algorithm that is heavily influenced by PBFT. The set of protocols do not work and scale well in open, permission-less systems where anyone can join and leave the network at any time.
An NRF may also integrate Nakamoto consensus used in Bitcoin, which is decided based on which node can solve the computation puzzle the fastest. A major contribution of Nakamoto consensus is the use of the gossip protocol. It's more suitable for peer-to-peer settings where communication between non-faulty nodes cannot be assumed. Instead, we assume a node is only connected to a subset of other nodes. Then the peer-to-peer protocol may be used, wherein messages are being gossiped between nodes. In addition to proof of work (PoW), proof of stake (PoS), delegated PoS (DPoS), proof of elapse time (PoET), and so on may be used by the consensus module.
For practical purposes, Proof-of-X (PoX) protocols introduced above may be Byzantine fault-tolerant. By design, it possible for any number of nodes to have open participation, and no one has to know the full set of participants. Simpler than previous consensus algorithms, it eliminates the complexity of point-to-point connections, leader election, quadratic communication overhead, etc.
Notably, the number of winners could be greater than one, wherein multiple NRFs could win in a competition. For example, with PoW, multiple NRFs could solve the same cryptopgraphical puzzle and every other NRF, which does not solve the puzzle, could also verify the CompetitionProof included in the broadcast transaction blocks later.

3c. If the NRF2 200 wins the competition, the NRF2 200 broadcasts/publishes the transaction block (VerTool Block) to the NRF1 100.
3d. When the NRF1 100 receives the broadcast transaction block from the NRF2 200, it will validate the received block with one or more of the following procedure.
1) It validates the signature field in the Block Header to check integrity and decide if the transaction block is really generated by the winning NRF. If passed, then:
2) It validates the CompetitionProof in the Block Header to judge whether the sending NRF really wins the competition. If passed, then:
3) It validates the PointerToExisitngBlock field in the Block Header depending on the specific rules defined in the competition. If passed, it means that the list of verification tools 105 is a valid proposal.
If the transaction block is verified as a valid proposal, the NRF1 100 updates its local verification tool information (NRF1-ID and its corresponding NRF1-VerTool) with the list of verification tools 105 contained in the Block Body.
4. The NF2 202 sends a service request 405 to the NF1 102, wherein the service request 405 comprises the following parameters listed in the table below:

| | |
|---|---|
| 1 | Service Requirements (e.g. service type, service duration, arguments, ...) |
| 2 | NF2-cert |

The "Service Requirements" depend on the type of the NF (NF2 202) and the available service types that can be provided from the NF service producer (NF1 102). Therefore, they can be extended according to concrete service request scenarios. The NF certificate field (NF2-cert) provides NF Profile, NF2-PubKey and NRF2's Profile. The service request 405 will be signed by NF2-PrivKey;
5. The NF1 102 receives the service request 405 from the NF2 202, and gets the NF2-cert from the service request 405 after checking the NF signature. In the NF2-cert, the NF1 102 retrieves the NRF2-ID 103. After that, the NF1 102 sends the request 101 to the NRF1 100 for retrieving the NRF2-VerTool 105 indicated by the NRF2-ID 103 as a parameter comprised in the request 101. For the proactive authentication disclosed previously, The NF1 102 sends the service request 405 to the NF2 202, and gets the NF2-cert from the service response. It will not be elaborated here for simplicity.
6. The NRF1 100 receives the request 101 from the NF1 102 and locally looks up with the parameter NRF2-ID 103. If found, the NRF1 100 replies to the NF1 102 with a response 104 with the NRF2-VerTool 105 of NRF2 200.
7. The NF1 102 verifies the NF2-cert by using the received verification tool 105 of NRF2 200.
8. If authentication is successful, the NF1 102 replies to the NF2 202 with a message to provide a response 406 of either accepting or rejecting the service request depending on the authentication result.

The procedure of FIG. 4 is described in the following for the hierarchical structure 300 shown in FIG. 3.

Notably, in the hierarchical structure 300, an NF registers at one NRF and gets a certificate from the NRF as well. However, a child NRF is certified by its parent NRF. Therefore, the verification tool 105 of an NRF may be derivative. An NF-cert may be verified by two types of NRF-VerTools, which are the NRF-VerTool where the NF registers and the parent NRF-VerTool.

In this embodiment, when an NF (here the NF1 102) needs to verify another NF (here the NF2 102), the verification tool 105 that the NF1 102 has to obtain is determined by a relationship of the two NRFs (here the NRF1 100 and the NRF2 200). Specifically, there could be following cases:
Case 1: The NRF1 100 and the NRF2 200 may be the same NRF (not the case in FIG. 3).
Case 2: The NRF1 100 and the NRF2 200 may in the same domain (the NRF1 100 and NRF2 200 are e.g. in a same tree (not the in FIG. 3) or different trees (the case in FIG. 3)).
Case 3: The NRF1 100 and NRF2 200 may in different domains.

The decentralized authentication solution for a hierarchical NRF architecture 300 may generally follow the same procedure as depicted in FIG. 4. For simplicity, in the following only operations that are different to those in the flat architecture are described in more detail.
1(1a). The NF1 102 registers at the NRF1 100 (same as in the flat NRF case).
2(2a). The NF2 202 registers at the NRF2 200 (same as in the flat NRF case).
3. The NRF1 100 may send to the NRF2 200 its verification tool 105 (i.e. NRF1-VerTool) (same as in the flat NRF case).
For Case 1, there is no verification toll 105 exchange operation because they are the same NRF.
For Case 2, the NRF2 200 may send a request to its parent NRF 302, to identify a lowest common ancestor (LCA) NRF with the NRF1 100 in the NRF tree/domain, and sends a request to retrieve the LCA-NRF-VerTool. The request may comprise parameters as shown in the table below:

| | |
|---|---|
| 1 | NRF1-ID |
| 2 | NRF2-ID |

For Case 3, there are several sub-cases in further as follows.
- Case 3.1: If the NRF1 100 and NRF2 200 are both root NRFs of two NRF trees/domains, the procedure is the same as in the flat NRF case.
- Case 3.2: If either the NRF1 100 or the NRF2 200 is not a root NRF, the NRF1 100 and the NRF2 200 do not exchange any verification tool 105. This means that the NRF1 100 and the NRF2 200 may be not directly accessible.

4. The NF2 202 may send a service request 405 to the NF1 102 (same as in the flat NRF case).
5. The NF1 102 may get the NRF2-ID 103 from NF2's service request 405 (same as in the flat NRF case).
6. The NRF1 100 may receive the request from the NF1 102, and decide where to retrieve the verification tool 105 that can verify NF2-cert based on the parsed NRF2-ID 103.
For Case 1, the NRF1 100 may directly use the VerTool 105 of itself to reply the request from NF1 102.
For Case 2, the NRF1 100 may forward the request to its parent NRF 301. If the parent NRF 301 is not the LCA-NRF given NRF1-ID and NRF2-ID, the request will be further forwarded to the parent of the parent of the NRF1 100, until the LCA-NRF is reached. The LCA-NRF will reply the child NRF who forwarded the request and back to NRF1 100 so on so forth. Then NRF1 100 replies NF1 102.
For Case 3.1, the procedure may be the same as in the flat NRF case.
For Case 3.2, if the NRF1 100 is a root NRF, while the NRF2 200 is not, the NRF1 100 replies the request of NF1 102 with the verification tool 105 of the root NRF that certifies NRF2-VerTool. If the NRF1 100 is not a root NRF while the NRF2 200 is a root NRF, the NRF1 100 may send the request up to the root NRF that certifies NRF1-VerTool (called NRF1's Root NRF). The NRF1's Root NRF may look up the verification tool 105 of the NRF2 and reply along the path back to NRF1 100. If neither NRF1 100 nor NRF2 200 is a root NRF, NRF1 100 may send the request to the NRF1's Root NRF, and NRF1's Root NRF may look up the verification tool 105 of NRF2's Root NRF and reply to NRF1 100. Then NRF 100 may reply to NF1 102.

7. The NF1 102 verifies NF2-cert by using NRF2-VerTool 105 (same as in the flat NRF case).
8. The NF1 102 replies to the NF2 202 with a message to provide a service response 406 (same as in the flat NRF case).

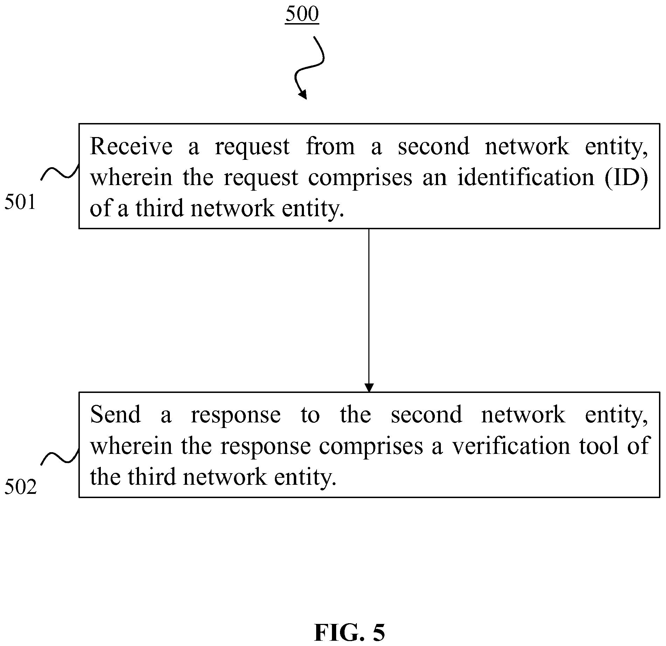

FIG. 5 shows a method 500 according to an embodiment. The method 500 is for decentralized network entity authentication, in particular NF authentication. The method 500 may be performed by the first network entity 100 of FIG. The method 500 comprises receiving 501 a request 101 from a second network entity 102, wherein the request 101 comprises an ID 103 of a third network entity 200. The method 500 may further comprise sending 502 a response 104 to the second network entity 200, wherein the response 104 comprises a verification tool 105 of the third network entity 200.

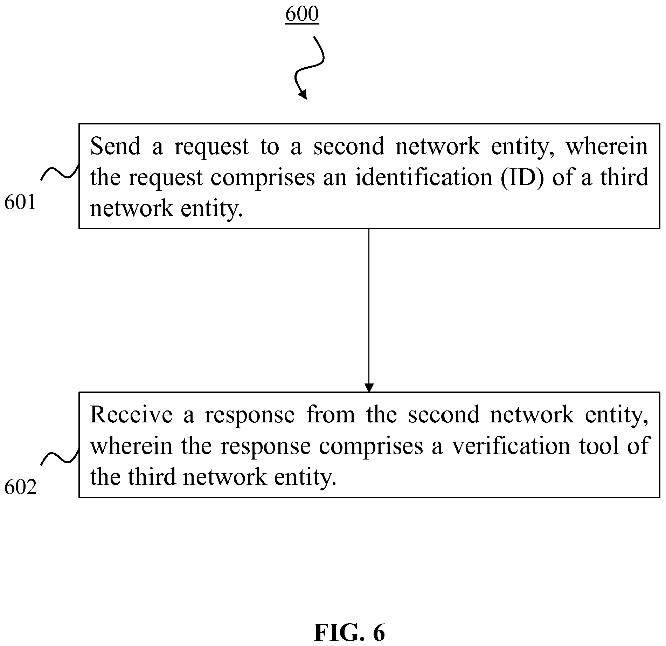

FIG. 6 shows a method 600 according to an embodiment. The method 600 may be for decentralized network entity authentication, in particular NF authentication. The method 600 may be performed by the second network entity 200 of FIG. 1. The method 600 comprises sending 601 a request 101 to a first network entity 100, wherein the request 101 comprises an ID 103 of a third network entity 200. The method 600 may further comprise receiving 602 a response 104 from the first network entity 100, wherein the response 104 comprises a verification tool 105 of the third network entity 200.

The proposed embodiments implementing a distributed network entity authentication based on the introduced NRF-ID related information provides some key benefits that are summarized as follows.
1. The embodiments decentralize the authentication service that is usually built as a centralized entity. This removes the single point of failure and makes the authentication services more robust. Without having a centralized entity also means that no one can really take over control because every node participates to provide its verification tool 105, unless all nodes are compromised (or majority of them), authentication service can still work.
2. The embodiments provide a way more efficient paradigm for authentication. Originally, an authentication request will have to be sent to a centralized entity to finish the verification task. With a decentralized architecture/framework, a request does not have to be sent to a centralized entity while every NRF participating to form the authentication service can provide such a service. This avoids the bottleneck effect where the load at an authentication service point does not have enough resource to handle promptly every request.
3. The embodiments may incorporate Blockchain. Therefore, verification tools 105 stored across multiple NRFs are immutable, traceable and automatically synchronized. In other words, the NRFs together become a trusted registry embedded in the network and no verification tool 105 saved there can be tampered. In addition, the verification tool 105 stored there are all public information rather than secret materials, this facilitates to share them across different domains.
4. The embodiments are quite flexible. First of all, they fit to both the basic flat NRF structure and the hierarchical structure 300. Secondly, it allows a run-time expansion where any NRF and NF can join and leave at any time. This is also because of decentralization of the authentication service and every player is equal and plays the same role to provide authentication service.

The present disclosure has been described in conjunction with various embodiments as examples as well as implementations. However, other variations can be understood and effected by those persons skilled in the art and practicing the claimed embodiments, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A first network repository function, NRF, (100) for decentralized network entity authentication in a mobile network, wherein the first NRF comprises
a processor being configured to:
receive a request (101) from a first network function, NF, (102), wherein the request (101) comprises an identification, ID, (103) of a second NRF (200); and
send a response (104) to the first NF (102), wherein the response (104) comprises a verification tool (105) of the second NRF (200).

2. The first NRF (100) according to claim 1, wherein the request comprises more than one ID, and each of the IDs corresponds to a different second NRF (200).

3. The first NRF (100) according to claim 1 or 2, wherein the processor is further configured to:
receive a registration request (401) from the first NF (102), wherein the registration request (401) comprises a profile of the first NF (102); and
send a response of the registration result (402) to the first NF (102), wherein the registration result comprises an ID of the first NRF (100).

4. The first NRF (100) according to one of the claims 1 to 3, wherein the processor is further configured to:
receive a first verification tool publishing request (403) from the second NRF (200), wherein the first verification tool publishing request (403) comprises the verification tool (105) of the second NRF (200); and/or,
send a second verification tool publishing request (403) to the second NRF (200), wherein the second verification tool publishing request (403) comprises a verification tool of the first NRF (100).

5. The first NRF (100) according to claim 4, wherein the processor is further configured to:
publish a transaction block (404) to the second NRF (200), wherein the transaction block (400) comprises the verification tool (105) of the first NRF (100) and/or the second NRF (200); or
receive a transaction block (404) published by the second NRF (200) , wherein the transaction block (404) comprises the verification tool (105) of the second NRF (200) and/or the first NRF (100).

6. The first NRF (100) according to claim 5, wherein the processor is further configured to:
participate in a competition with the second NRF (200), in order to determine who publishes the transaction block (404).

7. The first NRF (100) according to claim 5 or 6, wherein the processor is further configured to:
update the verification tool (105) of the first NRF with the verification tool (105) included in the transaction block (404) published by the second NRF (200), if the published transaction block (404) is validated.

8. The first NRF (100) according to one of the claim 1 to 3, wherein:
the first NRF (100) and the second NRF (200) are arranged in a hierarchical structure (300) of NRFs (100, 200);
the first NRF (100) and the second NRF (200) are arranged on different hierarchy levels; and
the processor is further configured to forward the request (101) received from the first NF (102) to the parent NRF of the first NRF.

9. The first NRF (100) according to one of the claims 1 to 8, wherein a verification tool (105) of the first NRF (100) and/or a verification tool (105) of the second NRF (200) comprises, respectively, a public key, a profile, and a signature, of the first NRF (100) or the second NRF (200).

10. The first NRF (100) according to claim 9, wherein the verification tool (105) of the first NRF (100) and/or the second NRF (200) comprises a public key pair, wherein the public key pair comprises, respectively, the public key of the first NRF (100) or the second NRF (200), and a public key of a NF (102, 202).

11. The first NRF (100) according to one of the claims 1 to 10, wherein the ID comprises one of: IP address, MAC address, URL.

12. A first network function, NF, (102) for decentralized network entity authentication in a mobile network, wherein the first NF (102) comprises
a processor being configured to:
send a request (101) to a first network repository function, NRF, (100), wherein the request (101) comprises an identification, ID, (103) of a second NRF (200); and
receive a response (103) from the first NRF (100), wherein the response (103) comprises a verification tool (105) of the second NRF (200).

13. The first NF (102) according to claim 12, wherein:
the request comprises more than one ID, and each of the IDs corresponds to a different second NRF (200).

14. The first NF (102) according to claim 12 or 13, wherein the processor is further configured to:
receive a service request (405) from a second NF (202), wherein the service request (405) comprises a certificate of the second NF (202), wherein the certificate of the second NF (202) is signed by the second NRF (200); and
determine the ID of the second NRF (200) from the certificate.

15. The first NF (102) according to claim 14, wherein the processor is further configured to:
verify the certificate with the verification tool (105) of the second NRF (200).

## Patentansprüche

1. Erste Netzlagerfunktion (Network Repository Function, NRF) (100) zur dezentralen Authentifiierung von Netzeinheiten in einem Mobilfunknetz, wobei die erste NRF Folgendes umfasst einen Prozessor, der für Folgendes konfiguriert ist:
Empfangen einer Anfrage (101) iner ersten Netzfunktion, NF, (102), wobei die Anfrage (101) eine Identifikation, ID, (103) einer zweiten NRF (200) umfasst; und
Senden einer Antwort (104) an die erste NF (102), wobei die Antwort (104) ein Verifizierungstool (105) der zweiten NRF (200) umfasst.

2. Erste NRF (100) nach Anspruch 1, wobei die Anfrage mehr als eine ID umfasst und jede der IDs einer anderen zweiten NRF (200) entspricht.

3. Erste NRF (100) nach Anspruch 1 oder 2, wobei der Prozessor weiterhin konfiguriert ist zum:
Empfangen einer Registrierungsanfrage (401) von der ersten NF (102), wobei die Registrierungsanfrage (401) ein Profil der ersten NF (102) umfasst; und
Senden einer Antwort des Registrierungsergebnisses (402) an die erste NF (102), wobei das Registrierungsergebnis eine ID der ersten NRF (100) umfasst.

4. Erste NRF (100) nach einem der Ansprüche 1 bis 3, wobei der Prozessor weiterhin konfiguriert ist zum:
Empfangen einer ersten Verifizeriungstool-Veröffentlichungsanfrage (403) von der zweiten NRF (200),
wobei die erste Verifizeriungstool-Veröffentlichungsanfrage (403) das Verifizierungstool (105) der zweiten NRF (200) umfasst; und/oder
Senden einer zweiten Verifizeriungstool-Veröffentlichungsanfrage (403) an die zweite NRF (200), wobei die zweite Verifizeriungstool-Veröffentlichungsanfrage (403) ein Verifizierungstool der ersten NRF (100) umfasst.

5. Erste NRF (100) nach Anspruch 4, wobei der Prozessor weiterhin konfiguriert ist zum:
Veröffentlichen eines Transaktionsblocks (404) an die zweite NRF (200), wobei der Transaktionsblock (400) das Verifizierungstool (105) die ersten NRF (100) und/oder des zweiten NRF (200) umfasst; oder
Empfangen einer von der zweiten NRF (200) veröffentlichten Transaktionsblocks (404), wobei der Transaktionsblock (404) das Verifizierungstool (105) der zweiten NRF (200) und/oder der ersten NRF (100) umfasst.

6. Erste NRF (100) nach Anspruch 5, wobei der Prozessor weiterhin konfiguriert ist zum:
Teilnehmen an einem Wettbewerb mit der zweiten NRF (200), um zu bestimmen, wer den Transaktionsblock veröffentlicht (404).

7. Erste NRF (100) nach Anspruch 5 oder 6, wobei der Prozessor weiterhin konfiguriert ist zum:
Aktualisieren des Verifizierungstools (105) der ersten NRF mit dem Verifizierungstool (105), das in dem von der zweiten NRF (200) veröffentlichten Transaktionsblock (404) enthalten ist, wenn der veröffentlichte Transaktionsblock (404) validiert ist.

8. Erste NRF (100) nach einem der Ansprüche 1 bis 3, wobei:
die erste NRF (100) und die zweite NRF (200) in einer hierarchischen Struktur (300) von NRFs (100, 200) angeordnet sind;
die erste NRF (100) und die zweite NRF (200) auf unterschiedlichen Hierarchieebenen angeordnet sind; und
der Prozessor ferner dazu konfiguriert ist, die von der ersten NF (102) empfangene Anfrage (101) an die übergeordnete NRF der ersten NRF weiterzuleiten.

9. Erste NRF (100) nach einem der Ansprüche 1 bis 8, wobei ein Verifizierungstool (105) der ersten NRF (100) und/oder ein Verifizierungstool (105) der zweiten NRF (200) jeweils einen öffentlichen Schlüssel, ein Profil und eine Signatur der ersten NRF (100) oder der zweiten NRF (200) umfasst.

10. Erste NRF (100) nach Anspruch 9, wobei das Verifizierungstool (105) der ersten NRF (100) und/oder der zweiten NRF (200) ein öffentliches Schlüsselpaar umfasst, wobei das öffentliche Schlüsselpaar jeweils den öffentlichen Schlüssel der ersten NRF (100) oder der zweiten NRF (200) und einen öffentlichen Schlüssel einer NF (102, 202) umfasst.

11. Erste NRF (100) nach einem der Ansprüche 1 bis 10, wobei die ID eines der folgenden Elemente umfasst: IP-Adresse, MAC-Adresse, URL.

12. Erste Netzfunktion, NF, (102) zur dezentralen Authentifizierung von Netzeinheiten in einem Mobilfunknetz, wobei die erste NF (102) Folgendes umfasst
einen Prozessor, der für Folgendes konfiguriert ist:
Senden einer Anfrage (101) an eine erste Netzlagerfunktion, NRF, (100), wobei die Anfrage (101) eine Identifikation, ID, (103) einer zweiten NRF (200) Folgendes umfasst; und
Empfangen einer Antwort (103) von der ersten NRF (100), wobei die Antwort (103) ein Verifizierungstool (105) der zweiten NRF (200) umfasst.

13. Erste NF (102) nach Anspruch 12, wobei:
die Anfrage mehr als eine ID umfasst und jede der IDs einer anderen zweiten NRF (200) entspricht.

14. Erste NF (102) nach Anspruch 12 oder 13, wobei der Prozessor weiterhin konfiguriert ist zum:
Empfangen einer Dienstanfrage (405) von einer zweiten NF (202), wobei die Dienstanfrage (405) ein Zertifikat der zweiten NF (202) umfasst, wobei das Zertifikat der zweiten NF (202) von der zweiten NRF (200) signiert ist; und
Bestimmen der ID der zweiten NRF (200) aus dem Zertifikat.

15. Erste NF (102) nach Anspruch 14, wobei der Prozessor weiterhin konfiguriert ist zum:
Überprüfen des Zertifikats mit dem Verifizierungstool (105) der zweiten NRF (200).

## Revendications

1. Première fonction de référentiel de réseau, NRF, (100) pour l'authentification d'entité de réseau décentralisée dans un réseau mobile, dans laquelle la première NRF comprend un processeur configuré pour :
recevoir une demande (101) en provenance d'une première fonction réseau, NF, (102), dans laquelle la demande (101) comprend une identification, ID, (103) d'une seconde NRF (200) ; et
envoyer une réponse (104) à la première NF (102), dans laquelle la réponse (104) comprend un outil de vérification (105) de la seconde NRF (200).

2. Première NRF (100) selon la revendication 1, dans laquelle la demande comprend plus d'une ID, et chacune des ID correspond à une seconde NRF (200) différente.

3. Première NRF (100) selon la revendication 1 ou 2, dans laquelle le processeur est également configuré pour :
recevoir une demande d'enregistrement (401) en provenance de la première NF (102), dans laquelle la demande d'enregistrement (401) comprend un profil de la première NF (102) ; et
envoyer une réponse du résultat d'enregistrement (402) à la première NF (102), dans laquelle le résultat d'enregistrement comprend une ID de la première NRF (100).

4. Première NRF (100) selon l'une des revendications 1 à 3, dans laquelle le processeur est également configuré pour :
recevoir une première demande de publication d'outil de vérification (403) en provenance de la seconde NRF (200), dans laquelle la première demande de publication d'outil de vérification (403) comprend l'outil de vérification (105) de la seconde NRF (200) ; et/ou
envoyer une seconde demande de publication d'outil de vérification (403) à la seconde NRF (200), dans laquelle la seconde demande de publication d'outil de vérification (403) comprend un outil de vérification de la première NRF (100).

5. Première NRF (100) selon la revendication 4, dans laquelle le processeur est également configuré pour :
publier un bloc de transaction (404) sur la seconde NRF (200), dans laquelle le bloc de transaction (400) comprend l'outil de vérification (105) de la première NRF (100) et/ou de la seconde NRF (200) ; ou
recevoir un bloc de transaction (404) publié par la seconde NRF (200), dans laquelle le bloc de transaction (404) comprend l'outil de vérification (105) de la seconde NRF (200) et/ou de la première NRF (100).

6. Première NRF (100) selon la revendication 5, dans laquelle le processeur est également configuré pour :
participer à une compétition avec la seconde NRF (200), afin de déterminer qui publie le bloc de transaction (404).

7. Première NRF (100) selon la revendication 5 ou 6, dans laquelle le processeur est également configuré pour :
mettre à jour l'outil de vérification (105) de la première NRF avec l'outil de vérification (105) compris dans le bloc de transaction (404) publié par la seconde NRF (200), si le bloc de transaction publié (404) est validé.

8. Première NRF (100) selon l'une des revendications 1 à 3, dans laquelle :
la première NRF (100) et la seconde NRF (200) sont agencées dans une structure hiérarchique (300) de NRF (100, 200) ;
la première NRF (100) et la seconde NRF (200) sont agencées sur différents niveaux hiérarchiques ; et
le processeur est également configuré pour transmettre la demande (101) reçue en provenance de la première NF (102) à la NRF parente de la première NRF.

9. Première NRF (100) selon l'une des revendications 1 à 8, dans laquelle un outil de vérification (105) de la première NRF (100) et/ou un outil de vérification (105) de la seconde NRF (200) comprend, respectivement, une clé publique, un profil et une signature de la première NRF (100) ou de la seconde NRF (200).

10. Première NRF (100) selon la revendication 9, dans laquelle l'outil de vérification (105) de la première NRF (100) et/ou de la seconde NRF (200) comprend une paire de clés publiques, dans laquelle la paire de clés publiques comprend, respectivement, la clé publique de la première NRF (100) ou de la seconde NRF (200), et une clé publique d'une NF (102, 202).

11. Première NRF (100) selon l'une des revendications 1 à 10, dans laquelle l'ID comprend l'une : d'une adresse IP, d'une adresse MAC, d'une URL.

12. Première fonction de réseau, NF, (102) pour l'authentification d'entité de réseau décentralisée dans un réseau mobile, dans laquelle la première NF (102) comprend un processeur configuré pour :
envoyer une demande (101) à une première fonction de référentiel réseau, NRF, (100), dans laquelle la demande (101) comprend une identification, ID, (103) d'une seconde NRF (200) ; et
recevoir une réponse (103) de la première NRF (100), dans laquelle la réponse (103) comprend un outil de vérification (105) de la seconde NRF (200).

13. Première NF (102) selon la revendication 12, dans laquelle :
la demande comprend plus d'une ID, et chacune des ID correspond à une seconde NRF (200) différente.

14. Première NF (102) selon la revendication 12 ou 13, dans laquelle le processeur est en outre configuré pour :
recevoir une demande de service (405) en provenance d'une seconde NF (202), dans laquelle la demande de service (405) comprend un certificat de la seconde NF (202), dans laquelle le certificat de la seconde NF (202) est signé par la seconde NRF (200) ; et
déterminer l'ID de la seconde NRF (200) à partir du certificat.

15. Première NF (102) selon la revendication 14, dans laquelle le processeur est également configuré pour :
vérifier le certificat avec l'outil de vérification (105) de la seconde NRF (200).
